# EUROPEAN PATENT SPECIFICATION

(11) **EP 1 126 984 B1**
(45) Date of publication and mention of the grant of the patent: **23.04.2003**
(21) Application number: 98957519.6
(22) Date of filing: 02.11.1998
(51) Int. Cl.: B60C 17/00, B60C 15/00, B60C 9/00, B60C 9/08

(54) **TREAD STIFFENING FOR TWO-PLY RUNFLAT TIRE**
LAUFFLÄCHENVERSTEIFUNG FÜR ZWEISCHICHTIGEN NOTLAUFREIFEN
RENFORCEMENT DE BANDE DE ROULEMENT POUR PNEU A AFFAISSEMENT LIMITE, A DEUX NAPPES

(43) Date of publication of application: 29.08.2001
(73) Proprietor: THE GOODYEAR TIRE & RUBBER COMPANY, Akron, Ohio 44316-0001 (US)
(72) Inventor: CLOSE, Roland, B-4790 Burg-Reuland (BE); VERBEKE-ENSCH, Agnes, Nathalie, Iwana, B-6700 Arlon (BE)
(74) Representative: Leitz, Paul
(86) International application number: US9823318
(87) International publication number: WO00026045

(56) References cited:
- EP-A- 0 364 710
- WO-A-94/18015
- WO-A-98/54008
- WO-A-98/54013
- US-A- 5 427 166
- US-A- 5 871 600

## Description

### TECHNICAL FIELD

The present invention relates to the design of two-ply pneumatic radial ply runflat passenger tires.

### BACKGROUND OF THE INVENTION

Various methods have been devised for enabling the safe continued operation of unpressurized or underpressurized vehicle tires with the intent of minimizing further damage to the uninflated tire and without simultaneously compromising vehicle handling over a distance from the place where the tire has lost its pressure to a place desired by the driver, such as a service station, where the tire can be changed. Loss of tire pressure can result from a variety of causes, including puncture by an object such as a nail or other sharp object.

Pneumatic tires designed for sustained operation under conditions of unpressurization or underpressurization are also called runflat tires, as they are capable of being driven in the uninflated, or what would generally be called "flat," condition. The conventional pneumatic tire collapses upon itself when it is uninflated and is carrying the weight of a vehicle. The tire's sidewalls buckle outward in the portion of the tire where the tread contacts the ground, making the tire "flat," at least in that ground-contacting region.

The term "runflat" is generally used to describe a tire that is designed such that the tire structure alone, in particular the sidewalls, has sufficient rigidity and strength to support the vehicle load when the tire is operated without being inflated. The sidewalls and internal surfaces of the tire do not collapse or buckle onto themselves, and the tire does not otherwise contain or use other supporting structures or devices to prevent the tire from collapsing.

An early example of a runflat tire design is described in U.S. Pat. No. 4,111,249, entitled the "Banded Tire," in which a hoop or annular band approximately as wide as the tread is circumferentially deployed beneath the tread. The hoop in combination with the rest of the tire structure could support the vehicle weight in the uninflated condition.

Another approach taken has been simply to strengthen the sidewalls by increasing their cross-sectional thickness so as to resist the bending that takes place in the portions of the sidewalls that are adjacent to the ground-contacting portion of the tread. However, due to the large amounts of rubber required to stiffen the sidewall members, flexure heating becomes a major factor in tire failure during runflat operation, especially when the uninflated tire is operated at high speeds. Pirelli discloses such a runflat tire design in European Pat. Pub. No. 0-475-258A1.

In general, runflat tires incorporate sidewalls that are thicker and/or stiffer than typical non-runflat tires so that the tire's load can be carried by an uninflated tire with minimum adverse effects upon the tire itself and upon vehicle handling until such reasonable time as the tire can be repaired or replaced. The typical methods used in sidewall thickening and stiffening include the incorporation of circumferentially disposed wedge inserts in the inner peripheral surface of the sidewall portion of the carcass, which is the region in the tire usually having the lowest resistance to deformation under vertical loading. In such runflat tire designs, each sidewall is thickened in such a way that its overall thickness, in the region between the bead and the tread shoulder, is on the order of the thickness of the tread regions of the tire.

The reinforced sidewalls of such tires, when operated in the uninflated condition, experience a net compressive load in the region of the sidewall closest to the road-contacting portion of the tread. Also, the bending stresses on the reinforced sidewalls are such that, during runflat operation, the outer portions of the sidewalls experience tensile forces while the inner portions experience compression stresses.

A Goodyear patent U.S. Pat. No. 5,368,082, by Oare et al ('082), disclosed a low aspect runflat, pneumatic radial ply tire which employs special sidewall inserts to improve stiffness. Approximately six additional pounds of weight per tire was required to support an 800 lb load in this uninflated tire. This earlier invention, although superior to prior attempts at runflat tire design, still imposed a weight penalty that could be offset by the elimination of a spare tire and the tire jack. However, this weight penalty becomes even more problematic in the design of tires having higher aspect ratios.

Two U.S. Patents, 5,427,166 and 5,511,599 of Walter L. Willard, Jr., show Michelin tires that disclose the addition of a third ply and the addition of a third insert in the sidewall to further increase the runflat performance of the tire over that of the '082 patent.

Attention is also drawn to intermediate documents WO-A-98/54008 and WO-A-98/54013, both published on 3 December 1998, and pursuant to Article 54(3) EPC relevant for assessing novelty, which disclose a pneumatic radial two-ply runflat tire having a tread, two inextensible annular beads, two sidewalls, an inner liner, a belt structure located between the tread and a carcass, the latter comprising a radial ply structure consisting of a first radial ply and a second radial ply that are separated in each sidewall by respective axially outermost sidewall wedge inserts and a second set of axially inward disposed sidewall wedge inserts disposed between the inner liner and the first radial ply. The first radial ply is reinforced with a nonmetallic material having a tensile modulus of elasticity of between 4 GPa and 30 Gpa and the second radial ply is reinforced with e.g. aramid material having a tensile modulus of elasticity in the range of between 20 GPa and 80 Gpa.

### OBJECTS OF THE INVENTION

One object of the present invention is to provide a runflat tire having a tread that resists upward buckling during runflat operation.

Another object of the present invention is to provide a runflat tire that is of light-weight construction.

Still another object of the present invention is to provide a runflat tire having sidewalls that resist deformation in the region of ground contact during uninflated operation.

A yet further object of the present invention is to provide a runflat tire having good full-inflated handling characteristics as well as good runflat handling properties and runflat operational life.

### SUMMARY OF THE INVENTION

The present invention provides a pneumatic radial two ply runflat tire according to claim 1.

Preferred embodiments are defined in the appended claims.

### BRIEF DESCRIPTION OF THE DRAWINGS

**FIGURE 1** is a cross-sectional view of a prior art runflat tire design incorporating multiple wedge inserts in each sidewall and multiple plies in the ply structure;
**FIGURE 2A** is a cross-sectional view of the ground-contacting portion of the tread of a prior art tire;
**FIGURE 2B** is a meridional, cross-sectional view of a prior art runflat tire, showing the deformation of the sidewalls and tread in the ground-contacting portion of the uninflated tire;
**FIGURE 3A** illustrates the location of the neutral bending axis in the central portion of the upward buckled tread of the uninflated prior art tire;
**FIGURE 3B** illustrates the location of the neutral bending axis in the central portion of the upward buckled tread of the uninflated prior art tire having a hypothetical high-modulus outer ply;
**FIGURE 3C** illustrates the location of the neutral bending axis in one sidewall of an uninflated prior art tire;
**FIGURE 3D** illustrates the location of the neutral bending axis in one sidewall of an uninflated prior art tire having a hypothetical high-modulus outer ply;
**FIGURE 4** is a meridional cross-sectional view of the tire of the present invention;
**FIGURE 5A** shows an I-beam which demonstrates the principles of neutral bending axis and bending moment of inertia;
**FIGURE 5B** shows an I-beam which demonstrates the change in location of the neutral bending axis when one of the beam's elements is increased in rigidity.

### DEFINITIONS

"Apex" means an elastomeric filler located radially above the bead core and between the plies and the turnup plies.

"Aspect Ratio" means the ratio of the section height of a tire to its section width; also refers to the cross-sectional profile of the tire; a low-profile tire, for example, has a low aspect ratio.

"Axial" and "Axially" means the lines or directions that are parallel to the axis of rotation of the tire.

"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

"Belt Structure" or "Reinforcement Belts" or "Belt Package" means at least two annular layers or plies of parallel cords, woven or unwoven, underlying the tread, unanchored to the bead, and having both left and right cord angles in the range from 18° to 30° relative to the equatorial plane of the tire.

"Breakers" or "Tire Breakers" means the same as belt or belt structure or reinforcement belts.

"Carcass" means the tire structure apart from the belt structure, tread, undertread over the plies, but including the beads.

"Casing" means the carcass, belt structure, beads, sidewalls and all other components of the tire excepting the tread and undertread.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Cord" means one of the reinforcement strands, including fibers, with which the plies and belts are reinforced.

"Crown" or "Tire Crown" means the tread, tread shoulders and the immediately adjacent portions of the sidewalls.

"Equatorial Plane" means the plane perpendicular to the tire's axis of rotation and passing through the center of its tread; or the plane containing the circumferential centerline of the tread.

"Footprint" means the contact patch or area of contact of the tire tread with a flat surface at zero speed and under normal load and pressure.

"Gauge" refers to thickness.

"Inner Liner" means the layer or layers of elastomer or other material that form the inside surface of a tubeless tire and that contain the inflating fluid within the tire.

"Insert" or "wedge insert" means the crescent- or wedge-shaped reinforcement typically used to reinforce the sidewalls of runflat-type tires; it also refers to the elastomeric non-crescent-shaped insert that underlies the tread.

"Lateral" means a direction parallel to the axial direction.

"Meridion" or "meridional" refers to the direction that runs radially outward from one tire bead, across the tread (parallel to the axial direction) and radially inward to the other tire bead. Cross-sectional views of tires are generally meridional sections.

"Normal Inflation Pressure" means the specific design inflation pressure at a specified load assigned by the appropriate standards organization for the service condition for the tire.

"Normal Load" means the specific design inflation pressure and load assigned by the appropriate standards organization for the service condition for the tire.

"Ply" means a cord-reinforced layer of rubber-coated radially deployed or otherwise parallel cords.

"Radial" and "radially" mean directions radially toward or away from the axis of rotation of the tire.

"Radial Ply Structure" means the one or more carcass plies or which at least one ply has reinforcing cords oriented at an angle of between 65° and 90° with respect to the equatorial plane of the tire.

"Radial Ply Tire" means a belted or circumferentially-restricted pneumatic tire in which at least one ply has cords which extend from bead to bead are laid at cord angles between 65° and 90° with respect to the equatorial plane of the tire.

"Section Height" means the radial distance from the nominal rim diameter to the outer diameter of the tire at its equatorial plane.

"Section Width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Shoulder" means the upper portion of sidewall just below the tread edge.

"Sidewall" means that portion of a tire between the tread and the bead.

"Tangential" and "Tangentially" refer to segments of circular curves that intersect at a point through which can be drawn a single line that is mutually tangential to both circular segments.

"Toe guard" refers to the circumferentialy deployed elastomeric rim-contacting portion of the tire axially inward of each bead.

"Tread Cap" refers to the tread and the underlying material into which the tread pattern is molded.

"Tread Contour" means the shape of a tire tread as viewed in axial cross section.

"Tread width" means the arc length of the tread surface in the plane includes the axis of rotation of the tire.

"Wedge Insert" means the same as "Insert."

### DETAILED DESCRIPTION OF THE PREFERRED EMBODIMENT

### Prior Art Embodiment

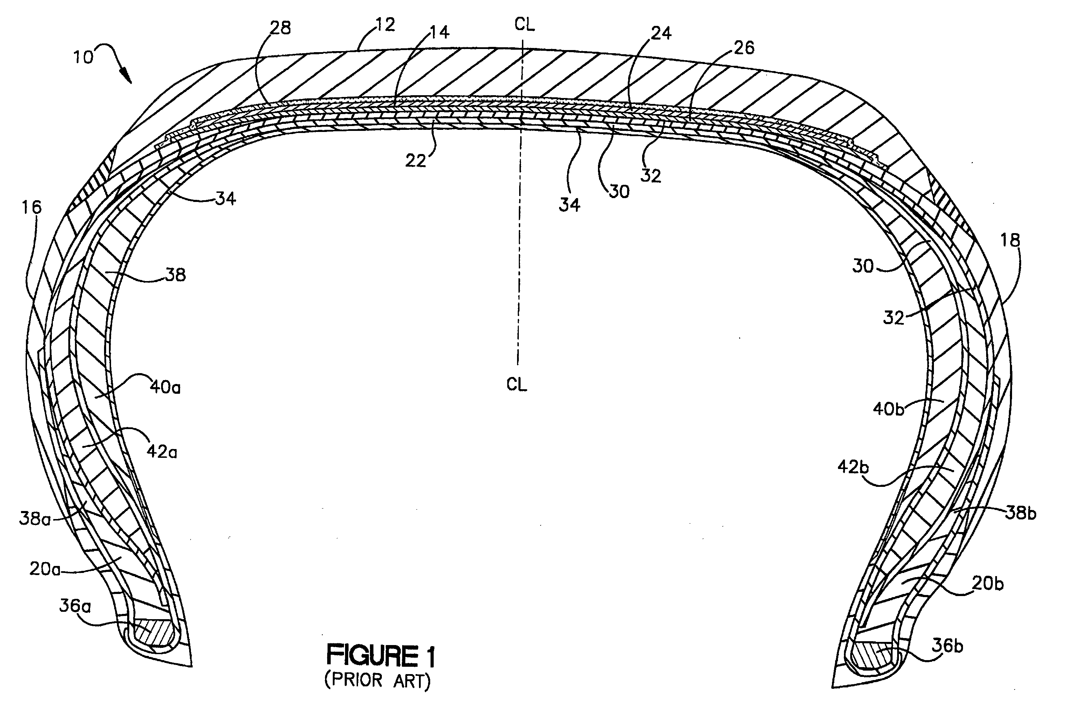

With reference to **FIGURE 1,** a meridional cross section of a typical prior art pneumatic radial runflat tire **10** is illustrated. The tire **10** shown in **FIGURE 1** is of intermediate aspect ratio. It has a tread **12,** a belt structure **14** comprising belts **24,26,** a pair of sidewall portions **16,18,** a pair of bead regions **20a,20b,** a carcass structure **22,** and a fabric overlay **28** deployed between the bottom portion of tread cap **12** and the upper parts of the belt structure. The carcass **22** comprises a first ply **30** and second ply **32,** a gas-impervious inner liner **34,** a pair of beads **36a,36b,** a pair of bead filler apexes **38a,38b,** a first pair of sidewall wedge inserts **40a,40b,** and a second pair of inserts **42a,42b.** The first or innermost wedge insert **40a,40b** is located between the inner liner **34** and the first ply **30,** and the second wedge insert **42a,42b** is located between the first ply **30** and second ply **32.** The fabric overlay **28** is disposed beneath, or radially inward of, tread cap **12** and on top of, or radially outward from, belt structure **14.** The reinforced sidewall portions **16,18** of carcass structure **22** give the tire **10** a limited runflat capability.

The structural reinforcement in the sidewall area of the tire **10** substantially increases the overall thickness of the sidewall portions **16,18.** This generalized prior art runflat tire design shows the more or less uniformly thickened sidewalls that characterize runflat tire designs. The insert-reinforced sidewalls are necessary to support the tire's load with minimal sidewall deflection when the tire **10** is uninflated. Such runflat tire designs provide good vehicle handling and performance during full-inflated operation, and they yield acceptable runflat vehicle handling and runflat operational life when the tire is uninflated. Runflat tires generally weigh more than equivalent non-runflat-capable tires, and their greater structural complexity results in time consuming manufacturing and quality control.

**FIGURE 2A** shows a fragmentary schematic of a normally inflated prior art tire with its tread **12** in contact with the ground **13.** The flattening of the tread **12,** in the region where it contacts the ground **13,** induces bending stresses in the tread and its underlying components, including belt structure **14,** fabric overlay **28,** belts **24,26,** radial plies **30,32,** and inner liner **34.** More specifically, the bending stesses derive from the flattening of the tread **12** from the as-molded and/or the as-inflated meridional curvature of tread and its underlying structures. These bending stresses induce tensile stresses in the radially inward structures beneath tread **12,** such as the inner liner **34** and the radial plies **30,32.** Corresponding compressive stresses are induced in the elastomeric material of tread **12** and such underlying structures as the fabric overlay **28** and portions of the belt structure **14.**

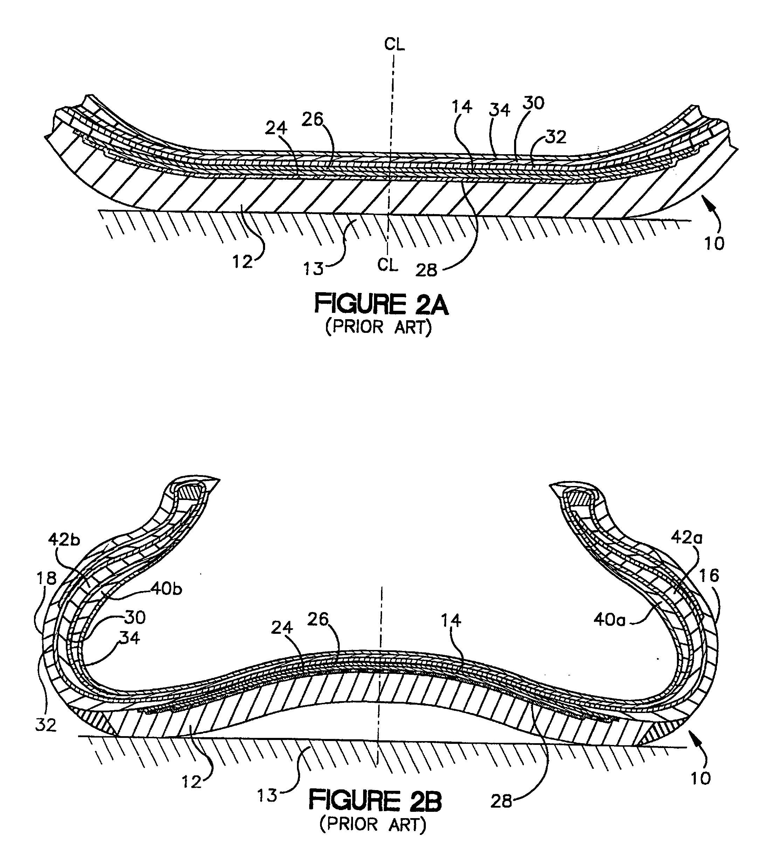

**FIGURE 2B** illustrates the bending of the sidewalls **16,18** of the prior art runflat tire **10** and the upward buckling of tread **12** in the region where the tread makes contact with the flat road surface **13.** The upward buckling of the central tread region is one of the undesireable feature which the present invention addresses, because of the adverse affect it has on vehicle handling during runflat operation and the adverse effect it also has on the tire's runflat operational life. The upward buckling also corresponds to the formation of bending stresses in the central portions of tread **12** and its underlying (i.e., radially inward) structures. The bending stresses in the tread **12** during runflat operation, as illustrated in **FIGURE 2B,** are greater than those associated with simple flattening of the tread during normal-inflated operation as illustrated in **FIGURE 2A.**

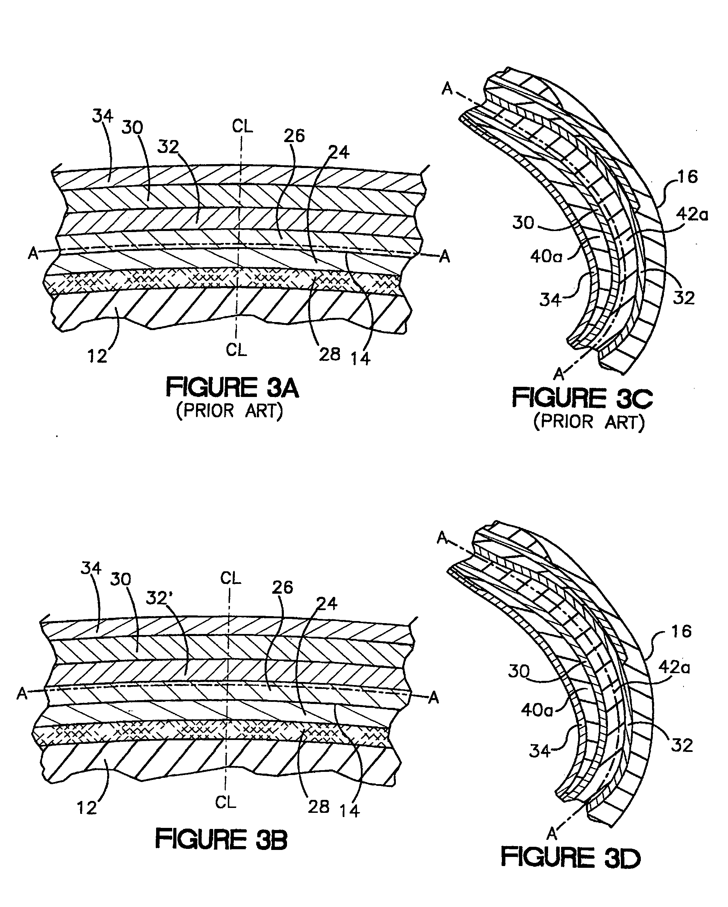

**FIGURE 3A** is a fragmentary, cross-sectional detail (not in dimensional proportion) of the belts **24,26,** plies **30,32,** inner liner **34** and fabric overlay **28** as they would appear within the upward-buckled central portion of the tread region of the prior art tire **10** as it is shown in **FIGURE 2B.** The neutral bending axis A-A shown in **FIGURE 3A** is located near the interface area between belts **24,26,** which location has been chosen arbitrarily, but with engineering judgment, for the sake of explaining the present invention in relation to the prior art. Those skilled in the art will appreciate that, in **FIGURE 3A**, the structural elements of tread **12** which lie above the neutral axis A-A -- i.e., radially inward of the tread **12** -- will experience tensile loading, while those structures located below the neutral axis A-A, i.e., closer to tread **12**, will experience compressive loading. The location of neutral axis A-A in relation to belts **24,26** is approximate, taking into account the tensile-stress-bearing capabilities of radial plies **30,32** and the tensile- and compressive-stress-bearing capabilities of the belts **24,26.** The fabric overlay **28** is not a compressive-load-bearing structure, nor is the inner liner **34** an effective tensile-load-bearing structure. The neutral axis A-A is shown to be located within belt structure **14** purely as an approximation of where it would lie given the relative greater modulus of elasticity of the steel reinforcing cords in belts **24,26** compared to the modulus of the cords that reinforce the plies **30,32** of the prior art tire. It should be apparent to those skilled in the art that the incorporation, in the region above the neutral being axis A-A in **FIGURE 3A,** of tensile bearing reinforcing elements having a high tensile modulus of elasticity will contribute an overall greater resistance to the amount upward buckling of the tread during runflat operation. That is, the stiffness of the crown area will be increased by the addition of high-modulus structural elements in the regions where tensile stresses are encountered. A significant result of the incorporation of high-modulus tensile-stress-bearing reinforcements would be a translation of the neutral bending axis A-A toward the member thus reinforced. More specifically, if the second ply **32** of the prior art tire were to be made of a hypothetical high-modulus material, then the neutral axis A-A would move to a location such as the one shown in **FIGURE 3B.**

The significance of the change in location of the neutral bending axis A-A will be discussed in more detail further below.

### The Present Invention

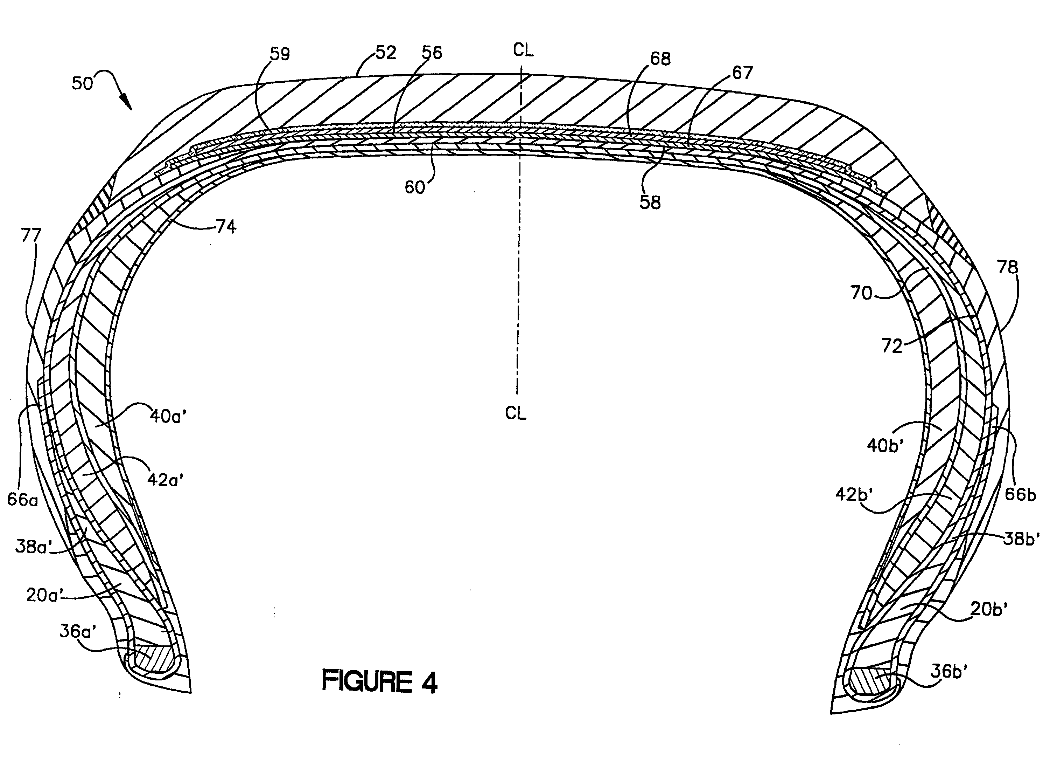

**FIGURE 4** shows a meridional cross-sectional view of a runflat tire **50** according to the present invention. The tire **50** shown is of intermediate aspect ratio. It has a tread **52,** a belt structure **56** comprising belts **67,68,** a pair of sidewall portions **77,78,** a pair of bead regions **20a',20b',** a carcass structure **60,** and a fabric overlay **59** deployed between the bottom portion of tread **52** and the upper parts, or radially outward-most portion, of the belt structure. The carcass **60** comprises a first ply **70** and second ply **72,** a gas-impervious inner liner **74,** a pair of beads **36a',36b',** a pair of bead filler apexes **38a',38b',** a first pair of sidewall wedge inserts **40a',40b',** and a second pair of inserts **42a',42b'.** Each of the first or innermost wedge inserts **40a',40b'** is located between the inner liner **74** and the first ply **70,** and each of the second wedge inserts **42a',42b'** is located between the first ply **70** and second ply **72.** (Throughout the specification, primed and double primed numbers represent structural elements which are substantially identical to structural elements represented by the same unprimed number.)

The practice of the inventive concept will become evident in the description below, wherein the use of aramid as the reinforcing material of the second or outermost ply **72** of the present invention is described.

### Aramid Reinforced Second Ply

Aramid is an aromatic polyamide compound e.g. PPTA: poly (p-phenylene terephthalamide) having the following properties which are shown in comparision to rayon, steel and E-glass.

| | Aramid | Rayon | Steel | E-Glass |
|---|---|---|---|---|
| Modulus of Elasticity (GPa) | 80 | 18 | 210 | 73 |
| Specific Gravity | 1.45 | 1.53 | 7.85 | 2.58 |

Notice that aramid has a resistance to tensile-stress-induced strain, i.e., it has a high modulus of elasticity. It also has a low specific gravity, or density. More specifically, aramid has more than four times the elastic modulus of rayon and a comparable specific gravity. Steel has a higher modulus of elasticity than aramid, but steel is also denser, which would act to increase the weight of the tire. Aramid is lighter than glass reinforcing material, but has a comparable modulus.

Thus one of the inventive feature of the present invention is the use of aramid reinforcing cords in the second or outermost ply **72.** Another inventive feature is the clamping or anchoring of the ply **72** around the beads **36a',36b'** resulting in the turnup ends **66a,66b,** as shown in **FIGURE 4.** Thus ply **72** is clamped around the beads as shown in **FIGURE 4,** while the radial ply **70** is a "floating" ply, i.e., terminating without going around the bead **36a',36b'.** (While **FIGURE 4** shows the aramid ply **72** as being clamped or wrapped around the beads in such a way that turnup ends **66a,66b** are located axially outward of the ply **72,** i.e., the ply **72** wraps around each bead from the axially inward side of each bead toward the axially outward side, the direction of wrapping or clamping of the ply **72** around the beads could as well be in the opposite direction.) Clamping of the ply **72** to the beads increases the ability of the aramid reinforcing material to resist deformation when it is exposed to the tensile stresses associated with runflat operation.

The present invention further contemplates the manufacture of the tire **50** in such as way as to induce tensile prestressing of the outer ply **72,** thereby further increasing the tire's rigidity and resistance to deformation during runflat operation. Such prestressing can be induced during manufacturing and molding of the tire according to methods that are well-known to those skilled in the art. The clamping of the second ply **72** around the bead structures **36a',36b'** aids in the induction of tensile prestressing of the aramid reinforcing cords of the second ply during the manufacturing process.

### Origins and Effects of Tensile Stresses During Runflat Operation

During runflat operation, tensile stresses in the second or outer ply of runflat tires derive from dynamical factors that become apparent upon contemplation of **FIGURES 3A** and **3B. FIGURES 3A** and **3B** each show in close-up view the central tread sections of the prior art tire **10,** as it is shown more fully in meridional cross section in **FIGURE 2B. FIGURE 3A** shows the location of the neutral bending axis A-A in the buckled tread region of an uninflated prior art runflat tire in the regions of the tire adjacent to where the center of the tread buckles upward from the ground, as has been described above. (The location of the neutral bending axis is an estimated approximate location, made here for the sake of illutration only; it is not intended to reflect the results of calculations nor is it a product of actual measurements.) To reiterate, the deformed portions of the tire that lie upward of the neutral bending axis A-A (in **FIGURE 3A**) experience tensile stresses, while those below the neutral bending axis, such as most of the belt structure **14** and all of the tread **12**, experience compressive stresses.

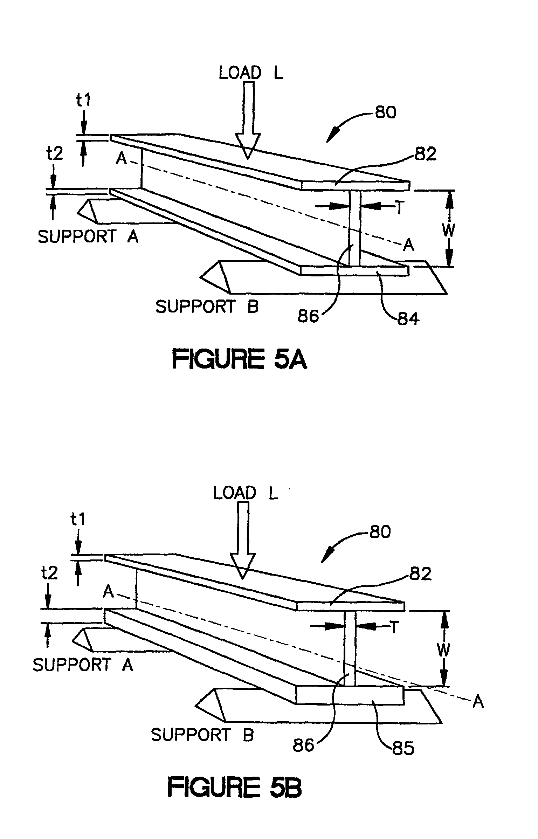

**FIGURE 3B** is the same as **FIGURE 3A** except that the outer ply **32'** is reinforced with a hypothetical material having a substantially higher modulus of elasticity than the corresponding ply **32** shown in **FIGURE 3A.** Accordingly, in **FIGURE 3B,** the neutral bending axis A-A is shown being closer to the ply **32'**, as would be expected when one element of a structural member is increased in its modulus of elasticity. This effect can be understood in reference to an I-beam analogy that is illustrated in **FIGURES 5A** and **5B,** which help explain the means by which the incorporation of a single high-modulus element can increase the bending modulus of entire structural member, such as the tread and sidewalls of tires.

**FIGURE 5A** shows an I-beam **80** comprising a web portion **86** and two flanges **82,84** separated by the web portion. The I-beam **80** is supported on supports **A** and **B,** and it carries load L, located approximately in the center of the beam. Those skilled in the art will readily recognize that the lower flange **84** will experience tensile loading, while the upper flange **82** will undergo compressive loading. The neutral bending axis A-A shown in **FIGURE 5A** is located along the center of the web **86.** This central location of the neutral bending axis is due to the cross-sectional symmetry of the beam **80** and, for the sake of the simplicity of this example, an assumed isotropy of the material of the I-beam. The thickness **t1** of the flange **82** is equal to the thickness **t2** of the flange **84.**

While it is apparent that the I-beam of **FIGURE 5A** will be deflected downward under the force of any load **L**, including the force of the beam's own weight, the degree of deflection can be reduced -- that is, the beam can be stiffened against deflection -- by several methods. One method by which to increase the resistance of the I-beam **80** to deflection is by increasing the width W of the web **86.** Another method is to increase the thickness (**t1,t2**) of one or both of the flanges **82,84.** And yet another method is to make the I-beam of a material having a high-modulus of elasticity.

**FIGURE 5B** shows essentially the same I-beam as that shown in **FIGURE 5A,** except that the thickness **t2** of the lower flange **85** is greater than the thickness **t1** of the upper flange **82.** The relationship of the I-beam analogy is such that **FIGURE 5A** corresponds to **FIGURE 3A,** while **FIGURE 5B,** with the thicker lower flange **85,** corresponds to **FIGURE 3B.** In **FIGURE 5B,** the location of the neutral bending axis is displaced downward from the central location shown in **FIGURE 5A** wherein the I-beam has a horizontally symetrical cross-section. In **FIGURE 5B,** the new location of the neutral bending axis A-A reflects the increased tensile-stress-bearing capacity of the lower flange **85** that has the greater thickness **t2**. In other words, flange **85**, being thicker and thus better able to resist tensile deformation, can exert more force with respect to the moment arm that is defined by the distance between the centroid of the flange **85** and the neutral bending axis. Correspondingly, the induced downward translation of the neutral bending axis (i.e., the translation of the neutral bending axis as shown in **FIGURE 5A** versus its location in **FIGURE 5B**) also gives a rigidifying benefit to the upper flange **82** in resisting compressive stresses; that is, the centroid of flange **82,** which is otherwise the same as in **FIGURE 5A**, has, as shown in **FIGURE 5B,** an increased moment arm with respect to the greater distance between the flange **82** and the neutral bending axis. Thus, **FIGURES 5A** and **5B** demonstrate that the thickening of a single element (i.e., the thicker flange **85,** in **FIGURE 5B**) increases the bending moment of inertia, and thus the corresponding bending modulus, of the entire structural member **80.** In other words, the beam **80,** as shown in **FIGURE 5B** with a thicker tensile-stress-bearing flange **85,** deforms less under the force of a given load **L** than would the corresponding beam shown in **FIGURE 5A**.

Referring again to **FIGURES 3A** and **3B,** the latter, by virtue of the hypothetical ply **32'**, which is reinforced with an unspecified high-modulus material, confers upon the entire tire cross-section a greater resistance to bending than is available in the corresponding member shown in **FIGURE 3A**.

Referring to **FIGURE 4**, the aramid reinforced ply **72** confers upon the tire **50** the property of increased resistance to flexure of the sidewalls and the tread, as described above in reference to **FIGURES 3A, 3B, 5A,** and **5B**. As for the sidewalls, **FIGURES 3C** and **3D** show the corresponding translation of the neutral bending axis A-A within the sidewall members of the prior art tire wherein a hypothetical high-modulus reinforcement is incorporated into the radial ply **32'. FIGURE 3C** shows the deformed sidewall **16** of the uninflated prior art tire (which is shown more generally in **FIGURE 2B**). **FIGURE 3D** shows the hypothetical prior art sidewall **16** where in the ply **32'** is reinforced by an unspecified high modulus material. In **FIGURE 3D,** the neutral bending axis A-A has undergone a translational relocation bringing it closer to the outer ply **32'** that is reinforced by a hypothetical high-modulus material.

Thus becomes clear the action of the aramid reinforced ply **72** of the present invention, as shown in **FIGURE 4.**

### Clamping of the Aramid Ply

Referring to **FIGURE 4,** the turnup ends **66a,66b** correspond to the clamping or anchoring of the tensile-stress-loaded aramid reinforced ply **72** with respect to the beads **36a',36b'.** No corresponding anchoring or clamping (around the beads) of the first or inner ply **70** is needed because this first ply experiences compressive loading during runflat operation, and the bulk of that compressive loading is supported by the wedge inserts **40a', 40b', 42a',** and **42b'.** The clamping of the second ply **72** around the beads is additionally useful during the tire manufacturing process during which the ply **72** becomes prestressed in tension, which prestressing further enhances the ability of the tread **52** and the sidewalls **77,78** to resist bending deformation, that is, to have an overall increased bending modulus of rigidity. As stated above, such prestressing can be induced during manufacturing and molding of the tire according to methods that are well-known to those skilled in the art.

The amount of tensile prestressing of the high-modulus outer ply 72 is intended to be in the range of between about 20 GPa and about 80 GPa, and most preferably in the range of between about 25 GPa and about 40 GPa.

### Operational Dynamics of the Inventive Concept

Thus the tire **50** of the present invention has a tread region **52** and sidewall portions **77,78** that have greater overall resistance to flexure during runflat operation than does the prior art tire **10.** The use of aramid reinforcement in the outer ply **72** of the tire **50** of the present invention thus enhances the resistance of the tread **52** to upward buckling during runflat operation by means of two mechanisms: (1) the sidewalls **77,78** are stiffer and are thus less prone to deformation during runflat operation, which thereby reduces the tread-lifting torsional forces that would otherwise be transmitted to the tread **52** during runflat operation, and (2) the tread **52** is itself afforded a greater overall bending modulus and resistance to upward buckling during runflat operation.

An additional benefit of the present invention is improved runflat tread contact with the road, which contributes both to improved runflat handling and runflat operational life (due to smaller magnitudes of cyclical flexure and the heating associated therewith). Another benefit is that the enhanced bending modulus of the sidewalls makes them better able to resist runflat deformation and thus decreases in the deformational magnitude of the cyclical flexure of the sidewalls, which contributes both to improved runflat vehicle handling and to improved runflat operational service life of the sidewall portions **77,78.** Yet another benefit of the present invention is that the tire **50** is lighter in overall weight than would be a tire in which the outer ply is reinforced with such high modulus but dense material as metal.

In overall result, the high modulus reinforcing cords of ply **72** in **FIGURE 4** work to increase the bending modulus of the sidewalls **77,78** and the tread **52** of the tire **50** of the present invention. In other words, the use of aramid reinforcing cords in the ply **72** (**FIGURE 4**), which corresponds to the ply **32** in **FIGURE 3A**, results in a reduction of the kind of deformation illustrated in the tread portion **12** and sidewall portions **16,18** shown in **FIGURE 2B.**

More generally, the idea of using a material having a high tensile modulus of elasticity and a low specific gravity as a reinforcing material for the outermost ply 72 contemplates the use of any material having a tensile modulus of elasticity of at least 30 GPa and a specific gravity in the range of between about 1 and about 3. In this general regard, the desired physical properties of the other tire components, i.e., those related to runflat performance, need also to be taken into account. Of specific interest are the wedge inserts 40a,40b,42a and 42b, and the inner ply 70.

As has been explained above, the tensile-stress of outer ply 72 works in concert with the wedge inserts and, to a small extent, the inner ply 70, in such a way that the compression bearing parts of the tire must complement the properties of the tensile-stress-bearing high-modulus outer ply. More specifically, the compression moduli of elasticity of the wedge inserts 40a,40b,42a and 42b should be in the range of between about 2.0 MPa to about 4.8 MPa, and most preferably in the range of between about 3.5 MPa and about 4.5 MPa. As for the inner ply 70, its relative small cross-section makes its load-bearing area virtually insignificant as a compression-load-bearing structure. Nonetheless, the ranges of the pertinent physical properties of the inner ply 70 should be specified in the context of the present invention.
Accordingly, the reinforcing material in the inner ply 70 is expected to have a tensile modulus of elasticity of between about 4 GPa and about 30 GPa, most preferably in the range of between about 6 GPa and about 12 GPa. The specific gravity of the reinforcing material of the inner ply 70 should be in the range of between about 1 and about 3, and most preferably not more than about 2.

### Operational Testing

A two-ply runflat tire **50**, built according to the present invention incorporated an inner ply that was reinforced with rayon and an outer ply that was reinforced with aramid. The tire was evaluated in a finite element analysis model, and it was also compared experimentally, in runflat handling tests, to a standard two-ply rayon reinforced runflat tire. The finite element analysis showed a reduction of the crown buckling for the aramid ply construction. During runflat handling tests, a deflated two ply all rayon reinforced tire was deployed in the right rear position and showed critical oversteer behaviour compared with the aramid reinforced tire according to the present invention which provided good rear axle stability and oversteer behavior. The aramid ply construction showed, in either right rear or right front deflated operation, an overall improvement of the stearing/handling performance compared to the two rayon ply construction.

## Claims

1. A pneumatic radial two-ply runflat tire (**50**) having a tread (**52**), two inextensible annular beads (**36a',36b'**), two sidewalls (**77,78**), an inner liner (**74**), a belt structure (**56**) located between the tread and a carcass (**60**), the latter comprising a radial ply structure (**58**) consisting of a first radial ply (**70**) and a second radial ply (**72**) that are separated in each sidewall by respective axially outermost sidewall wedge inserts (**42a',42b'**); and a second set of axially inward disposed sidewall wedge inserts (**40a', 40b'**) disposed between the inner liner and the first radial ply (**70**),
the first radial ply (**70**) being reinforced with a nonmetallic material having a tensile modulus of elasticity of between 4 GPa and 30 Gpa, and a specific gravity in the range of between 1 and 3;
the second radial ply (**72**) being reinforced with an aramid material having a tensile modulus of elasticity in the range of between 20 GPa and 80 Gpa;
the second radial ply (**72**) being prestressed in tension; and
the first radial ply (**70**) being a floating ply terminating without going around the annular beads (**36a', 36b'**), and the second radial ply (**72**) being clamped around the respective annular beads (**36a',36b'**) such that turnup ends (**66a,66b**) of the second ply are located radially outward of the annular beads (**36a',36b'**).

2. The tire of claim 1 in which the nonmetallic reinforcing material of the first radial ply (**70**) has a specific gravity of less than 2.

3. The tire of claim 1 in which the nonmetallic reinforcing material of the first radial ply (**70**) has a tensile modulus of elasticity in the range of between 6 GPa and 12 GPa.

## Patentansprüche

1. Doppellagen-Notlaufradialluftreifen (50) mit einem Laufstreifen (52), zwei nicht ausdehnbaren ringförmigen Wülsten (36a', 36b'), zwei Seitenwänden (77, 78), einem Innerliner (74), einer Gürtelstruktur (56), die sich zwischen dem Laufstreifen und einer Karkasse (60) befindet, wobei die letztere eine Radiallagenstruktur (58) aufweist, die aus einer ersten radialen Lage (70) und einer zweiten radialen Lage (72) besteht, die in jeder Seitenwand durch jeweilige axial äußerste Seitenwand-Keileinsätze (42a', 42b') getrennt sind; und einer zweiten Menge von axial innen angeordneten Seitenwand-Keileinsätzen (40a', 40b'), die zwischen dem Innerliner und der ersten radialen Lage (70) angeordnet sind,
wobei die erste radiale Lage (70) mit einem nicht metallischen Material verstärkt ist, das einen Zug-Elastizitätsmodul im Bereich von 4 GPa bis 30 GPa und eine spezifische Dichte im Bereich von 1 bis 3 besitzt;
die zweite radiale Lage (72) mit einem Aramidmaterial verstärkt ist, das einen Zug-Elastizitätsmodul im Bereich von 20 GPa bis 80 GPa besitzt;
die zweite radiale Lage (72) bezüglich Zug vorgespannt ist; und
die erste radiale Lage (70) eine schwebende Lage ist, die endet, ohne um die ringförmigen Wülste (36a', 36b') geführt zu sein, während die zweite radiale Lage (72) um die jeweiligen ringförmigen Wülste (36a', 36b') festgeklemmt ist, so dass sich die nach oben gewundenen Enden (66a, 66b) der zweiten Lage radial außerhalb der ringförmigen Wülste (36a', 36b') befinden.

2. Reifen nach Anspruch 1, bei dem das nicht metallische Verstärkungsmaterial der ersten radialen Lage (70) eine spezifische Dichte von weniger als 2 hat.

3. Reifen nach Anspruch 1, bei dem das nicht metallische Verstärkungsmaterial der ersten radialen Lage (70) einen Zug-Elastizitätsmodul im Bereich von 6 GPa bis 12 GPa besitzt.

## Revendications

1. Bandage pneumatique à deux nappes radiales (50) permettant de rouler à plat possédant une bande de roulement (52), deux talons annulaires inextensibles (36a', 36b'), deux flancs (77, 78), un calandrage intérieur (74), une structure de ceintures (56) située entre la bande de roulement et une carcasse (60), cette dernière comprenant une structure à nappe radiale (58) constituée par une première nappe radiale (70) et une deuxième nappe radiale (72) qui sont séparées dans chaque flanc par des pièces rapportées cunéiformes pour des flancs (42a', 42b') disposées le plus à l'extérieur en direction axiale ; et un deuxième jeu de pièces rapportées cunéiformes pour des flancs (40a', 40b') disposées à l'intérieur en direction axiale, qui vient se disposer entre le calandrage intérieur et la première nappe radiale (70) ;
la première nappe radiale (70) étant renforcée avec une matière non métallique possédant un module d'élasticité en tension entre 4 GPa et 30 GPa et un poids volumique dans la plage entre 1 et 3 ;
la deuxième nappe radiale (70) étant renforcée avec une matière d'aramide possédant un module d'élasticité en tension dans la plage entre 20 GPa et 80 GPa ;
la deuxième nappe radiale (72) étant mise en état de précontrainte en tension ; et
la première nappe radiale (70) étant une nappe flottante qui se termine avant d'entourer les talons annulaires (36a', 36b'), la deuxième nappe radiale 72 étant serrée autour des talons annulaires respectifs (36a', 36b') de telle sorte que les extrémités de retournement vers le haut (66a, 66b) de la deuxième nappe sont disposées à l'extérieur des talons annulaires (36a', 36b') en direction radiale.

2. Bandage pneumatique selon la revendication 1, dans lequel la matière de renforcement non métallique de la première nappe radiale (70) possède un poids volumique inférieur à 2.

3. Bandage pneumatique selon la revendication 1, dans lequel la matière de renforcement non métallique de la première nappe radiale (70) possède un module d'élasticité en tension dans la plage entre 6 GPa et 12 GPa.
